# EUROPÄISCHE PATENTANMELDUNG

(11) **EP 4 043 217 A1**
(43) Veröffentlichungstag der Anmeldung: **17.08.2022**
(21) Anmeldenummer: 21156557.7
(22) Anmeldetag: 11.02.2021
(51) Int. Cl.: B41F 33/00

(54) **DRUCKMASCHINE MIT EINER VORRICHTUNG ZUM FÖRDERN VON BEDRUCKSTOFF UND MIT EINER KAMERA**

(71) Anmelder: Heidelberger Druckmaschinen AG, 69115 Heidelberg (DE)
(72) Erfinder: Fergen, Immanuel, 76229 Karlsruhe (DE); Godau, Christoph, 68159 Mannheim (DE); Albrecht, Dominik, 69254 Malsch (DE); Böttger, Andreas, 69118 Heidelberg (DE); Gieser, Michael, 68723 Oftersheim (DE)

(57) **Zusammenfassung**

Eine erfindungsgemäße Druckmaschine mit einer Vorrichtung (10) zum Fördern von Bedruckstoff (3) und mit einer Kamera (40), wobei die Kamera an einem Rahmen (20) angeordnet ist und wenigstens einen Abschnitt (4) des Bedruckstoffs erfasst, zeichnet sich dadurch aus, dass der Rahmen (20) um eine horizontale Achse (21) schwenkbar ausgebildet ist und dass der Rahmen zusammen mit der Kamera (40) schwenkbar ist. Die Erfindung ermöglicht es in vorteilhafter Weise, den Bedruckstoff in der Druckmaschine problemfrei zu inspizieren.

## Beschreibung

### Erfindung

Die Erfindung betrifft eine Druckmaschine mit einer Vorrichtung zum Fördern von Bedruckstoff und mit einer Kamera mit den Merkmalen des Oberbegriffs von Anspruch 1.

### Gebiet der Technik

Die Erfindung liegt auf dem technischen Gebiet der grafischen Industrie und dort insbesondere im Bereich des als Offsetdruck bekannten indirekten Flachdrucks auf flache Substrate, d.h. des bildgemäßen Auftragens von Druckfluiden wie Offsetfarbe, Lack oder Grundierung auf bogen-, bahn-, folien- oder etikettenförmigen Bedruckstoffe, bevorzugt aus Papier, Karton, Pappe, Kunststoff, Metall oder Verbundmaterial. Insbesondere liegt die Erfindung im Teilgebiet der kameragebundenen Inspektion von Drucken in der Druckmaschine ("inline").

### Stand der Technik

Die EP1582350A1offenbart ein Gehäuse mit LED-Lichtquelle, Spiegeln und CCD-Kamera für die Inspektion von Drucken. Die Vorrichtung ist "inline" in einer Druckmaschine einsetzbar.

Die US8810810B2offenbart eine Druckmaschine mit Druckwerken und einem Tritt für einen Bediener zwischen den Druckwerken. Eine Kamera zur Inspektion von Drucken ist weit oberhalb des Trittes angeordnet.

Die WO2007077592A1 offenbart Blasluft beim Einsatz einer Vorrichtung zur Inspektion von Drucken.

### Technische Aufgabe

Es ist eine Aufgabe der vorliegenden Erfindung, eine Verbesserung gegenüber dem Stand der Technik zu schaffen, welche es insbesondere ermöglicht, den Bedruckstoff in der Druckmaschine problemfrei zu inspizieren.

### Erfindungsgemäße Lösung der Aufgabe

Diese Aufgabe wird erfindungsgemäß durch eine Druckmaschine nach Anspruch 1 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Druckmaschine mit einer Vorrichtung zum Fördern von Bedruckstoff und mit einer Kamera, wobei die Kamera an einem Rahmen angeordnet ist und wenigstens einen Abschnitt des Bedruckstoffs erfasst, zeichnet sich dadurch aus, dass der Rahmen um eine horizontale Achse schwenkbar ausgebildet ist und dass der Rahmen zusammen mit der Kamera schwenkbar ist.

### Vorteilhafte Ausbildungen und Wirkungen der Erfindung

Die Erfindung ermöglicht es in vorteilhafter Weise, den Bedruckstoff in der Druckmaschine problemfrei zu inspizieren. Durch das Vorsehen des schwenkbaren Rahmens und die hierdurch bewirkte Schwenkbarkeit der am Rahmen angeordneten Kamera, ist es einem Bediener auf einfache Weise möglich, die Kamera - z.B. zum Zweck der Wartung, der Reinigung oder des Austauschs - aus Ihrer Arbeitsposition heraus und in eine leicht zugängliche Position, z.B. eine Wartungsposition, hinein zu schwenken. Außer der Kamera können in vorteilhafter Weise auch weitere Komponenten für eine Inspektion an dem Rahmen angeordnet und mit diesem gemeinsam schwenkbar sein.

Ein weiterer Vorteil ergibt sich dadurch, dass der Rahmen auf einfache Weise mit allen Komponenten justiert, insbesondere feinjustiert werden kann. Hierdurch kann die Qualität der Inspektion verbessert werden.

Unter Inspektion soll in dieser Anmeldung auch eine Farbmessung verstanden werden.

### Weiterbildungen der Erfindung

Im Folgenden werden bevorzugte Weiterbildung der Erfindung (kurz: Weiterbildungen) beschrieben.

Eine Weiterbildung kann sich dadurch auszeichnen, dass die Kamera als eine CCD-Kamera ausgebildet ist.

Eine Weiterbildung kann sich dadurch auszeichnen, dass wenigstens eine Lichtquelle am Rahmen angeordnet ist und dass der Rahmen zusammen mit der Kamera und der Lichtquelle schwenkbar ist. Es ist ein besonderer Vorteil, dass die Kamera und die Lichtquelle - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Noch eine Weiterbildung kann sich dadurch auszeichnen, dass die Lichtquelle mehrere LED umfasst.

Eine Weiterbildung kann sich dadurch auszeichnen, dass wenigstens ein Spiegel am Rahmen angeordnet ist und dass der Rahmen zusammen mit der Kamera, der Lichtquelle und dem Spiegel schwenkbar ist. Es ist ein besonderer Vorteil, dass die Kamera, die Lichtquelle und der Spiegel - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Eine Weiterbildung kann sich dadurch auszeichnen, dass wenigstens eine Blasvorrichtung am Rahmen angeordnet ist und dass der Rahmen zusammen mit der Kamera und der Blasvorrichtung schwenkbar ist. Es ist ein besonderer Vorteil, dass die Kamera und die Blaseinrichtung (und soweit vorhanden die Lichtquelle und der Spiegel) - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Noch eine Weiterbildung kann sich dadurch auszeichnen, dass die Blasvorrichtung als eine Blasleiste ausgebildet ist.

Eine Weiterbildung kann sich dadurch auszeichnen, dass die Blasvorrichtung Blasluft auf den Bedruckstoff richtet, um den Bedruckstoff auf die Vorrichtung zum Fördern von Bedruckstoff zu drücken und zu stabilisieren. Hierdurch kann die Qualität der Inspektion deutlich verbessert werden.

Eine Weiterbildung kann sich dadurch auszeichnen, dass die Blasvorrichtung Blasluft auf die Kamera und/oder die Lichtquelle richtet, um die Kamera bzw. die Lichtquelle zu reinigen, z.B. von Papierstaub oder Puder.

Eine Weiterbildung kann sich dadurch auszeichnen, dass der Rahmen unter einem Tritt für einen Bediener der Druckmaschine angeordnet ist.

Noch eine Weiterbildung kann sich dadurch auszeichnen, dass der Tritt zwischen zwei Druckwerken der Druckmaschine angeordnet ist.

Noch eine Weiterbildung kann sich dadurch auszeichnen, dass der Tritt um eine horizontale Achse schwenkbar ausgebildet ist.

Noch eine Weiterbildung kann sich dadurch auszeichnen, dass der Rahmen und der Tritt separat schwenkbar sind.

Noch eine Weiterbildung kann sich dadurch auszeichnen, dass der Rahmen einen Anschluss für Kühlwasser umfasst.

Noch eine Weiterbildung kann sich dadurch auszeichnen, dass der Anschluss eine Schnellkupplung umfasst.

Noch eine Weiterbildung kann sich dadurch auszeichnen, dass der Rahmen im Bereich eines Wendewerkes zwischen zwei Druckwerken der Druckmaschine angeordnet ist.

Noch eine Weiterbildung kann sich dadurch auszeichnen, dass der Rahmen im Bereich nach einem letzten Druckwerk und vor einem Ausleger der Druckmaschine angeordnet ist.

Eine Weiterbildung kann sich dadurch auszeichnen, dass der Rahmen zusammen mit der Kamera, der Lichtquelle, dem Spiegel und der Blasvorrichtung aus der Druckmaschine entnehmbar ist.

Eine Weiterbildung kann sich dadurch auszeichnen, dass die Kamera auf den Bedruckstoff gerichtet ist, um eine Inspektion und/oder Farbmessung eines Druckbildes auf dem Bedruckstoff zu ermöglichen.

Noch eine Weiterbildung kann sich dadurch auszeichnen, dass die Druckmaschine eine bogenverarbeitende Offsetdruckmaschine ist.

Noch eine Weiterbildung kann sich dadurch auszeichnen, dass die Druckmaschine eine Tintendruckmaschine ist.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

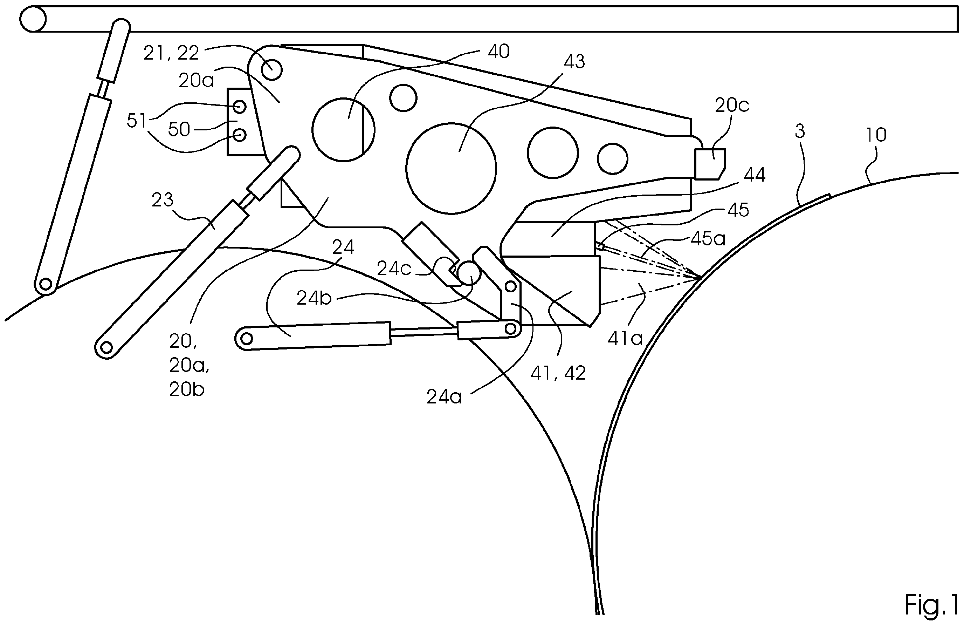

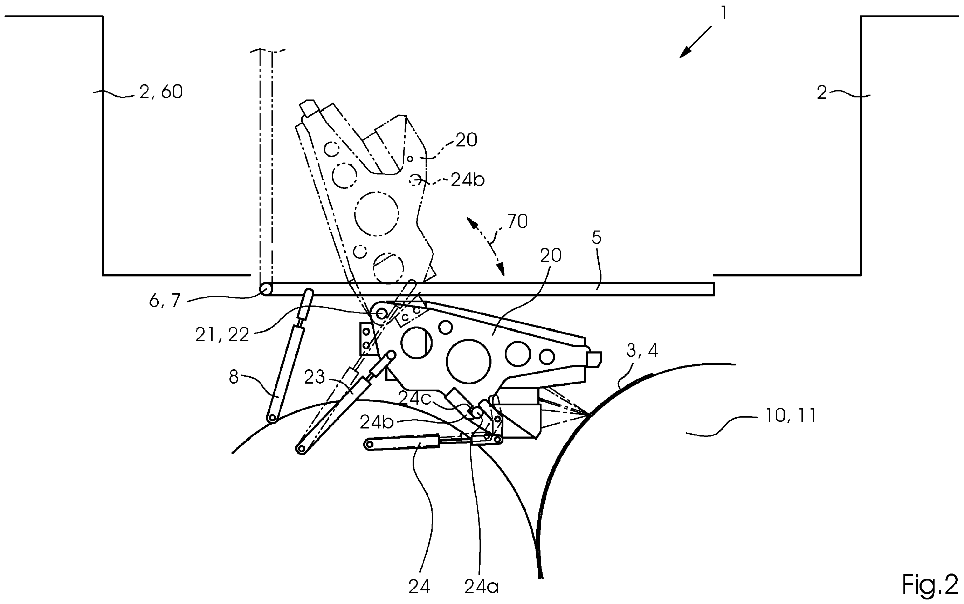

Die Figuren 1 und 2 zeigen ein bevorzugtes Ausführungsbeispiel der Erfindung und der Weiterbildungen. Einander entsprechende Merkmale sind in den Figuren mit denselben Bezugszeichen versehen.

### Figuren 1 und 2 zeigen:

Die Druckmaschine umfasst einen Tritt 5 für einen Bediener. Der Tritt ist zwischen den Druckwerken 2 oder zwischen einem Druckwerk 2 und dem Ausleger 60 angeordnet. Der Tritt ist um eine horizontale Achse 6 schwenkbar. Hierzu ist ein Schwenklager 7 vorgesehen. Der Tritt kann einen Antrieb 8 für das automatische Schwenken umfassen. Der Tritt kann aus der Horizontalen (z.B. zu Wartungszwecken) nach oben bzw. in die Vertikale geschwenkt werden.

Die Druckmaschine umfasst einen Rahmen 20. Der Rahmen ist unter dem Tritt 5 angeordnet. Der Rahmen ist um eine horizontale Achse 21 schwenkbar. Hierzu ist ein Schwenklager 22 vorgesehen. Der Rahmen kann einen Antrieb 23 für das automatische Schwenken umfassen. Der Antrieb kann ein Linearmotor sein. Anstelle des gezeigten Antriebs kann ein rotativer Antrieb an der Achse 21 vorgesehen sein. Anstelle des gezeigten Antriebs kann eine Gasdruckfeder vorgesehen sein. Der Rahmen kann nach oben geschwenkt werden: aus einer eher horizontalen Ausrichtung in eine eher vertikale Ausrichtung. Der Schwenkbereich kann etwa 90° bis etwa 180° betragen.

Bevorzugt wird zuerst der Tritt 5 nach oben geschwenkt und dann der Rahmen 20. Der Tritt wird bevorzugt per Hand nach oben geschwenkt, der Rahmen bevorzugt automatisch mittels eines Antriebs. Es kann aber auch vorgesehen sein, dass der Tritt und der Rahmen gleichzeitig nach oben geschwenkt werden. Beispielsweise kann der Rahmen an den Tritt angekoppelt sein.

Am Rahmen 20 ist eine Kamera 40 angeordnet. Die Kamera ist bevorzugt eine CCD-Kamera. Es können auch zwei oder mehr Kameras angeordnet sein, bevorzugt quer zur Maschinenrichtung.

Am Rahmen 20 ist des Weiteren bevorzugt eine Lichtquelle 41 angeordnet, welche Licht 41a erzeugt und auf den Bedruckstoff 3 oder wenigstens einen Abschnitt 4 des Bedruckstoffs richtet. Das Licht trifft bevorzugt als ein Lichtstreifen auf den Bedruckstoff. Die Lichtquelle kann eine oder mehrere LED umfassen, z.B. eine LED-Zeile. Es können auch zwei oder mehr Lichtquellen angeordnet sein, bevorzugt quer zur Maschinenrichtung.

Am Rahmen 20 ist des Weiteren bevorzugt wenigstens ein Spiegel 43 angeordnet. Es können auch mehrere Spiegel angeordnet sein. Im gezeigten Beispiel sind mehrere Spiegel zu einem Spiegelkasten 43 (Gehäuse mit innen angeordneten Spiegeln) zusammengefasst. Über den Spiegel (oder die mehreren Spiegel) wird das Licht 41a vom Bedruckstoff 3 zur Kamera (oder den mehreren Kameras) gespiegelt.

Am Rahmen 20 ist des Weiteren bevorzugt eine Blasvorrichtung 44 angeordnet. Diese umfasst bevorzugt eine Blasleiste 45 zum Erzeugen von Blasluft 45a, z.B. ein Rohr quer zur Maschinenrichtung mit einer Vielzahl von Löchern für den Luftaustritt. Die Blasluft ist bevorzugt auf den Bedruckstoff 3 gerichtet. Die Blasvorrichtung kann schwenkbar ausgebildet sein, so dass die Blasluft (zu Reinigungszwecken) auch auf die Kamera und/oder die Spiegel gerichtet werden kann. Alternativ kann für das Reinigen wenigstens eine weitere Blasvorrichtung vorgesehen sein.

Da der Rahmen 20 schwenkbar ist (siehe Doppelpfeil: Schwenkbewegung 70), sind auch die am Rahmen angeordneten Komponenten (Kamera 40 und bevorzugt Lichtquelle 41, Spiegel 43 und/oder Blasvorrichtung 44) schwenkbar, insbesondere und in vorteilhafter Weise zusammen mit dem Rahmen schwenkbar. Alle am Rahmen angeordneten Komponenten können gemeinsam und gleichzeitig durch Schwenken des Rahmens aus der Arbeitsposition (Inspektionsposition) z.B. in eine Wartungsposition geschwenkt werden. Das Schwenken (oder Absenken in die Arbeitsposition) kann durch einen oder mehrere Anschläge begrenzt sein, auf dem/denen der Rahmen betriebsmäßig aufliegt. Zusätzlich kann/können ein oder mehrere Dämpfer vorgesehen sein.

Es kann bevorzugt eine Verriegelungsvorrichtung 24 vorgesehen sein, um eine wiederholgenaue und stabile Positionierung des Rahmens in der Arbeitsposition zu gewährleisten. Die Verriegelungsvorrichtung kann den Rahmen aktiv in die Arbeitsposition drücken, wodurch sich eine definierte Endlage ergibt und wodurch - auch bei eventuellen Schwingungen - es nicht zu einem störenden Abheben des Rahmens kommen kann. Hierzu weist die Verriegelungsvorrichtung bevorzugt einen Zylinder 24 auf, der einen Heben 24a betätigt, welcher einen Zapfen 24b des Rahmens 20 gegen einen maschinenseitigen Anschlag 24c drückt. In Figur 2 ist die Verriegelungsvorrichtung in geschlossener und in offener Position gezeigt.

Am Rahmen 20 kann auch ein Anschluss für Kühlwasser vorgesehen sein, bevorzugt eine oder mehrere Schnellkupplung/-en. Der Anschluss kann dabei direkt am Rahmen angeordnet sein oder indirekt an einer der am Rahmen angeordneten Komponenten, bevorzugt an der Kamera oder an der Lichtquelle.

Figur 1 zeigt weiterhin: Das Licht 41a der Lichtquelle 41 gelangt als Lichtstreifen auf einen Abschnitt 4 des Bedruckstoff 3 und von dort durch den Spiegelkasten 43 zur Kamera 40.

Figur 1 zeigt weiterhin: Der Rahmen umfasst (in Richtung quer zur Maschinenrichtung; also senkrecht zur Zeichnungsebene der Figur) zwei im wesentlichen identische Seitenteile 20a, welche bevorzugt mehrfach durchbrochen sind (das vordere Seitenteil auf der Bedienseite BS der Maschine verdeckt in der Figur das hintere Seitenteil auf der Antriebsseite AS der Maschine). Der Rahmen umfasst weiterhin ein ebenfalls im wesentlichen identisches Mittenteil 20b des (das vordere Seitenteil verdeckt in der Figur das Mittenteil zwischen AS und BS). Die Seitenteile und das dazwischen befindliche Mittenteil sind bevorzugt über mehrere Stangen miteinander verbunden. Beispielhaft ist eine der Stangen 20c, bzw. deren Ende, dargestellt (die Achse der Stange steht senkrecht auf der Zeichnungsebenen der Figur). Der Rahmen hat somit einen kompakten Aufbau und ein geringes Gewicht. Hierdurch wird das Schwenken erleichtert. Zwischen den Seitenteilen und dem Mittenteil kann jeweils ein Spiegelkasten 43 und eine Kamera 40 angeordnet sein: in Summe somit zwei Spiegelkästen und zwei Kameras.

Figur 1 zeigt weiterhin: Es können Schnellkupplungen 51 als Anschluss 50 für Kühlwasser vorgesehen sein; diese sind aufgrund der offenen Bauweise des Rahmens leicht zugänglich.

Figur 2 zeigt beispielhaft eine Bogen verarbeitende Druckmaschine 1 mit zwei aufeinander folgenden Druckwerken 2. Das erste der beiden Druckwerke 2 umfasst - als Vorrichtung 10 zum Fördern von Bedruckstoff 3 - einen Zylinder 11.

Figur 2 zeigt ebenfalls beispielhaft eine Bogen verarbeitende Druckmaschine 1 mit einem (letzten) Druckwerk 2 und einem Ausleger 60. Druckwerk 2 umfasst wiederum - als Vorrichtung 10 zum Fördern von Bedruckstoff 3 - einen Zylinder 11.

### Bezugszeichenliste

- 1: Druckmaschine
- 2: Druckwerke
- 3: Bedruckstoff
- 4: Abschnitt des Bedruckstoffs
- 5: Tritt
- 6: Horizontale Achse
- 7: Schwenklager
- 8: Antrieb
- 10: Vorrichtung
- 11: Zylinder
- 20: Rahmen
- 20a: Seitenteile
- 20b: Mittenteil
- 20c: Stangen
- 21: Horizontale Achse
- 22: Schwenklager
- 23: Antrieb
- 24: Verriegelungsvorrichtung
- 40: Kamera, insbesondere CCD-Kamera
- 41: Lichtquelle
- 41a: Licht
- 42: LED
- 43: Spiegelkasten mit Spiegel(n)
- 44: Blasvorrichtung
- 45: Blasleiste
- 45a: Blasluft
- 50: Anschluss für Kühlwasser
- 51: Schnellkupplung
- 60: Ausleger
- 70: Schwenken bzw. Schwenkbewegung

## Patentansprüche

1. Druckmaschine mit einer Vorrichtung (10) zum Fördern von Bedruckstoff (3) und mit einer Kamera (40), wobei die Kamera an einem Rahmen (20) angeordnet ist und wenigstens einen Abschnitt (4) des Bedruckstoffs erfasst,
**dadurch gekennzeichnet,**
**dass** der Rahmen (20) um eine horizontale Achse (21) schwenkbar ausgebildet ist und dass der Rahmen zusammen mit der Kamera (40) schwenkbar ist.

2. Druckmaschine nach Anspruch 1,
**dadurch gekennzeichnet,**
**dass** wenigstens eine Lichtquelle (41) am Rahmen (20) angeordnet ist und dass der Rahmen zusammen mit der Kamera (40) und der Lichtquelle schwenkbar ist.

3. Druckmaschine nach Anspruch 2,
**dadurch gekennzeichnet,**
**dass** wenigstens ein Spiegel (43) am Rahmen (20) angeordnet ist und dass der Rahmen zusammen mit der Kamera (40), der Lichtquelle (41) und dem Spiegel schwenkbar ist.

4. Druckmaschine nach einem der Ansprüche,
**dadurch gekennzeichnet,**
**dass** wenigstens eine Blasvorrichtung (44) am Rahmen (20) angeordnet ist und dass der Rahmen zusammen mit der Kamera (40) und der Blasvorrichtung (44) schwenkbar ist.

5. Druckmaschine nach Anspruch 4,
**dadurch gekennzeichnet,**
**dass** die Blasvorrichtung (44) Blasluft (45a) auf den Bedruckstoff (3) richtet, um den Bedruckstoff auf die Vorrichtung (10) zum Fördern von Bedruckstoff zu drücken.

6. Druckmaschine nach Anspruch 4,
**dadurch gekennzeichnet,**
**dass** die Blasvorrichtung (44) Blasluft (45a) auf die Kamera (40) und/oder die Lichtquelle (41) richtet, um die Kamera bzw. die Lichtquelle zu reinigen.

7. Druckmaschine nach einem der vorhergehenden Ansprüche,
**dadurch gekennzeichnet,**
**dass** der Rahmen (20) unter einem Tritt (5) für einen Bediener der Druckmaschine (1) angeordnet ist.

8. Druckmaschine nach Anspruch 7,
**dadurch gekennzeichnet,**
**dass** der Rahmen (20) und der Tritt (5) separat schwenkbar sind.

9. Druckmaschine nach einem der vorhergehenden Ansprüche,
**dadurch gekennzeichnet,**
**dass** der Rahmen (20) zusammen mit der Kamera (40), der Lichtquelle (41), dem Spiegel (43) und der Blasvorrichtung (44) aus der Druckmaschine (1) entnehmbar ist.

10. Druckmaschine nach einem der vorhergehenden Ansprüche,
**dadurch gekennzeichnet,**
**dass** die Kamera (40) auf den Bedruckstoff (3) gerichtet ist, um eine Inspektion und/oder Farbmessung eines Druckbildes auf dem Bedruckstoff zu ermöglichen.
